# EUROPÄISCHE PATENTANMELDUNG

(11) **EP 1 522 813 A1**
(43) Veröffentlichungstag der Anmeldung: **13.04.2005**
(21) Anmeldenummer: 04024051.7
(22) Anmeldetag: 08.10.2004
(51) Int. Cl.: F28F 1/12

(54) **Vorrichtung zum Austausch von Wärme und Verfahren zur Herstellung einer derartigen Vorrichtung**

(30) Priorität: 09.10.2003 DE 10347068
(71) Anmelder: Behr Industrietechnik GmbH & Co. KG, 70469 Stuttgart (DE)
(72) Erfinder: Schmalzried, Günther, 71404 Korb (DE)
(74) Vertreter: Wallinger, Michael, Dr.

(57) **Zusammenfassung**

Die erfindungsgemäße Vorrichtung zum Austausch von Wärme weist auf eine Durchflusseinrichtung, welche von einem Fluid durchströmbar ist, und ein mit der wenigstens einen Durchflusseinrichtung verbundenes lamellenartiges Formteil, welches von Luft umströmbar ist, wobei über die Verbindung ein Wärmeaustausch zwischen der Luft und dem Fluid bewirkbar ist. Erfindungsgemäß weist die Verbindung mehrere entlang einer Längsrichtung des wenigstens einen lamellenartigen Formteils angeordnete Aussparungen auf.

## Beschreibung

Die vorliegende Erfindung bezieht sich auf eine Vorrichtung zum Austausch von Wärme zwischen einer die Vorrichtung an-/umströmenden Luft und einem die Vorrichtung teilweise durchströmenden Fluid, insbesondere auf einen Ladeluftkühler für Brennkraftmaschinen, wie sie insbesondere im Kraftfahrzeugsbereich eine Rolle spielen.

Derartige Wärmetauscher im Allgemeinen wie auch Ladeluftkühler im Speziellen sind aus dem Stand der Technik bekannt.

Mit einem solchen bekannten Ladeluftkühler für ein KFZ wird eine Temperatur einer einer Brennkraftmaschine des KFZ von einem Turbolader bzw. Kompressor zugeführten Ladeluft heruntergekühlt, wodurch eine Leistung der Brennkraftmaschine gesteigert werden kann.

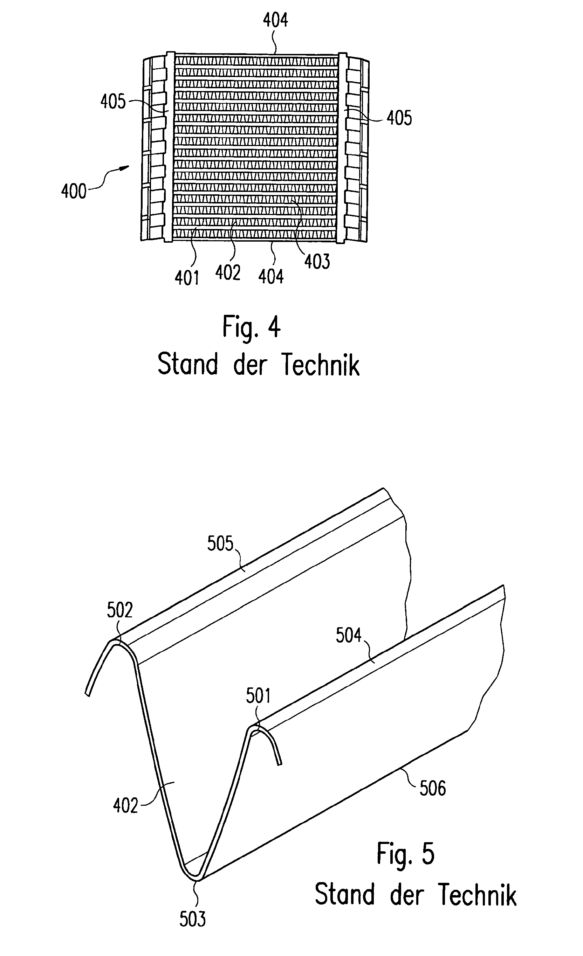

Fig.4 zeigt einen solchen, in diesem Fall mehrreihigen, Ladeluftkühler 400 für ein Kraftfahrzeug aus dem Stand der Technik.

Wie Fig.4 zeigt, umfasst der Ladeluftkühler 400 mehrere flache Rohre 401, die unter Verwendung einer Aluminiumlegierung durch Strangpressen gebildet werden.

Die Rohre 401 sind in mehreren parallelen Ebenen angeordnet, wobei die jeweils in einer Ebene angeordneten Rohre 401 ihrerseits ebenfalls parallel zueinander ausgerichtet sind.

Jedes Rohr 401 umfasst mehrere im wesentlichen parallel zu einer Längsrichtung des Rohrs 401 verlaufende Kältemitteldurchlässe (Kältemittelkanäle), welche einen kreisförmigen Querschnitt besitzen und durch welche Kältemittel strömt.

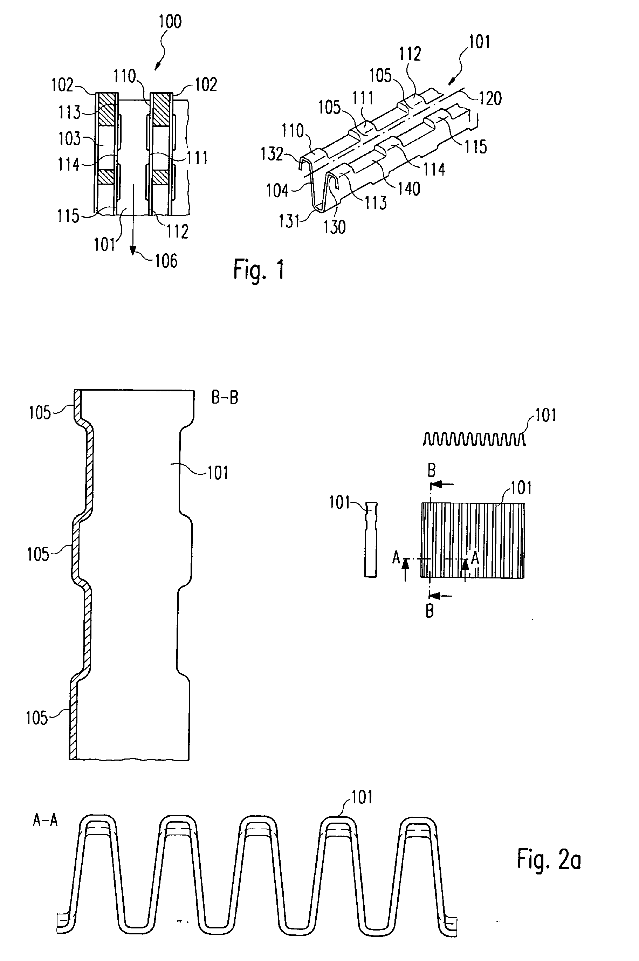

Wie weiter in Fig.1 gezeigt, sind mehrere gewellte aus Aluminium bestehende Rippen (Kühlrippen) 402 durch eine Walze gebildet zwischen benachbarten Rohren 401 angeordnet.

Fig. 5 zeigt eine solche Rippe 402 im Detail.

In einem Querschnitt weist die Rippe aus dem Stand der Technik eine wellen- bzw. U-/W-förmige Form auf. An höchsten Stellen 501, 502 und an niedrigsten Stellen 503 des Querschnitts bzw. an den durch diese höchsten und niedrigsten Stellen 501 bis 503 gebildeten linienförmigen, in einer Längsrichtung der Rippe 402 verlaufenden Kontaktflächen 504, 505, 506 ist die Rippe 402 jeweils mit einem Rohr 401 durch eine Lötverbindung verbunden.

Die Rohre 401 und die Rippen 402 bilden einen Kernabschnitt 403 des Ladeluftkühlers im Stand der Technik.

Eine Seitenplatte 404 zum Verstärken des Kernabschnitts 403 ist sowohl am oberen wie am unteren Ende des Kernabschnitts 403 gemäß Fig.4 angeordnet und an die Rohre 401 und an die Rippen 402 durch Lötmaterial gelötet, welches auf beide Seitenflächen der Rippen 402 plattiert bzw. aufgetragen ist.

Ein Paar von Sammeltanks 405 ist mit jedem Strömungskanalende der Rohre 401 strömungsdicht verbunden, um sich in eine Richtung senkrecht zur Längsachse jedes Rohrs 401 zu erstrecken.

Unter einem strömungsdicht miteinander Verbinden wird ein Verbinden in der Weise verstanden, dass durch diese Verbindung ein flüssiges und/oder gasförmiges Fluid, wie beispielsweise das Kühlmittel, flüssigkeits- und/oder gasdicht strömen kann.

Der Kernabschnitt 403 des Ladeluftkühlers wird von der Ladeluft mit hoher Temperatur von ungefähr 270 °C ange- bzw. umströmt, wobei zwischen der Ladeluft und dem Kältemittel ein Wärmetausch durchgeführt wird, bei welchem die Ladeluft gekühlt wird.

Bei dem Wärmetausch wird Wärme von der heißen Ladeluft über die Rippen 402 und über die mit den Rippen 402 über die Kontaktflächen 504, 505, 506 verbundenen Rohre 401 in das Kühlmittel, welches dabei in erheblichen Maße erhitzt wird, abgeführt.

Gerade in ersten bzw. vorderen - in einem Bezug auf eine Anströmung bzw. Anströmrichtung des Kernabschnitts 403 durch die Ladeluft - Kühlmittelkanälen (kritische Profile bzw. Blockbereiche), bei welchen die anströmende Ladeluft noch die hohen Temperaturen aufweist, kann bei diesem Wärmetausch das dort, d.h. in diesen ersten Kühlmittelkanälen, strömende Kühlmittel über seinen Siedepunkt erhitzt werden.

Diese Überschreitung des Siedepunkts des Kühlmittels führt zu einer Blasenbildung im Kühlmittel und damit zu Erosions- und Kavitationsproblemen.

Entsprechende Probleme wie bei diesem Ladeluftkühler können auch bei entsprechenden Wärmetauschern im Allgemeinen bei Anströmluft von hoher Temperatur auftreten.

Die Aufgabe der vorliegenden Erfindung besteht daher darin, einen Wärmetauscher zu schaffen, welcher hinsichtlich der Siedepunktsüberschreitung und der sich daraus ergebenen Problemen gegenüber dem oben beschriebenen Stand der Technik verbessert ist.

Dies wird erfindungsgemäß durch die Vorrichtung zum Austausch von Wärme sowie durch das Verfahren zur Herstellung einer Vorrichtung zum Austausch von Wärme mit den Merkmalen gemäß dem jeweiligen unabhängigen Patentanspruch gelöst.

Vorteilhafte Ausführungsformen und Weiterbildungen sind Gegenstand der Unteransprüche.

Die erfindungsgemäße Vorrichtung zum Austausch von Wärme weist auf wenigstens eine Durchflusseinrichtung, welche von einem Fluid durchströmbar ist, und wenigstens ein mit der wenigstens einen Durchflusseinrichtung verbundenes lamellenartiges Formteil, welches von Luft umströmbar ist.

Unter einem Formteil wird dabei eine modulare Einheit verstanden, die eine vorgegebene Form aufweist. Unter einem lamellenartigen Formteil wird ein Formteil verstanden, welches eine Hauptausdehnungsrichtung, d.h. eine Längsrichtung bzw. eine Richtung entlang einer Längsachse des Formteils, besitzt. In einem Querschnitt senkrecht zu der Längsachse weist das Formteil eine U- oder W-förmige Form auf.

Unter der Verbindung wird eine Verbindung verstanden, durch welche die miteinander verbundenen Teile kraft-, form- und/oder stoffschlüssig verbunden sind.

Unter Fluiden bzw. strömungsfähigen Medien werden im Rahmen der Erfindung flüssige und/oder gasförmige Medien beliebiger Viskosität verstanden, wie insbesondere, aber nicht ausschließlich Öle, Flüssigkeiten, insbesondere hoher Verdampfungswärme, Wasser, Luft oder Gase, beispielweise Kohlendioxid, sowie Kältemittel, die verdampfen oder kondensieren können. Die Fluide bzw. strömungsfähigen Medien können dabei auch Zusätze beispielsweise zur Korrosionshemmung enthalten.

Über diese Verbindung bei der Erfindung ist ein Wärmeaustausch zwischen der Luft und dem Fluid bewirkbar.

Erfindungsgemäß weist die Verbindung mehrere entlang einer Längsrichtung des wenigstens einen lamellenartigen Formteils angeordnete Aussparungen auf.

Anschaulich gesehen weist die Verbindung zwischen der wenigstens einen Durchflusseinrichtung und dem wenigstens einen lamellenartigen Formteil mehrere Durchbrüche, die Aussparungen, auf (abgesetzte Luftlamelle).

Diese Durchbrüche entlang der Verbindung zwischen dem wenigstens einen Formteil und der wenigstens eine Durchflusseinrichtung reduzieren eine Anlage- bzw. Auflagefläche zwischen dem Formteil und der Durchflusseinrichtung. Über der reduzierten Anlagefläche wird weniger Wärme und/oder Wärme langsamer übertragen.

Dieses führt dazu, dass bei der Erfindung weniger Wärme und/oder Wärme langsamer zwischen der Luft und dem Fluid übertragen wird.

Bei einer mit heißer Luft angeströmten erfindungsgemäßen Vorrichtung wird demzufolge weniger Wärme bzw. weniger Wärmeenergie von der heißen Luft auf das Fluid, beispielweise ein Kühlmittel, übertragen, welches dadurch weniger stark erhitzt wird.

Ein Sieden des Fluids und eine Dampfblasenbildung bei dem Sieden des Fluids sowie daraus entstehende im obigen beschriebene Probleme können vermieden werden.

Bei dem Verfahren zur Herstellung einer Vorrichtung zum Austausch von Wärme wird eine Verbindungsstelle zwischen wenigstens einer Durchflusseinrichtung, welche von einem Fluid durchströmbar ist, und wenigstens einem mit der wenigstens einen Durchflusseinrichtung verbundenen lamellenartigen Formteil, welches von Luft umströmbar ist, hergestellt durch Löten, Schweißen oder Kleben, wobei über die Verbindung ein Wärmeaustausch zwischen der Luft und dem Fluid bewirkbar ist.

Die erfindungsgemäß hergestellte Verbindung weist mehrere entlang einer Längsrichtung des wenigstens einen lamellenartigen Formteils angeordnete Aussparungen auf.

Femer weist das erfinderische Prinzip den Vorteil auf, dass für eine Herstellung der Vorrichtung, beispielweise durch ein Löten, notwendige Spannungen, insbesondere Spannungen über das lamellenartige Formteil, beibehalten werden. Anders ausgedrückt, eine durch die Spannungen aufrechterhaltene Stützwirkung, welche bei der Herstellung, beispielweise bei dem Löten, von Nöten ist, wird aufrechterhalten.

Auch lassen sich durch die Erfindung in vorteilhaften Weise Mehrkosten reduzieren.

Die Aussparungen bzw. die Durchbrüche lassen sich am einfachsten durch mehrere Stege, zwischen welchen die Aussparungen angeordnet sind, realisieren.

In einer bevorzugten Ausführungsform weist das wenigstens eine lamellenartige Formteil entlag der Verbindung die mehreren Stege auf, unter Verwendung derer die Verbindung zu der wenigstens einen Durchflusseinrichtung hergestellt wird, wobei zwischen den Stegen die Aussparungen ausgebildet werden.

Auch kann die wenigstens eine Durchflusseinrichtung entlang der Verbindung die mehreren Stege aufweisen, unter Verwendung derer die Verbindung zu dem wenigstens einen lamellenartigen Formteil hergestellt wird, wobei zwischen den Stegen die Aussparungen ausgebildet werden.

Ein Steg kann eine Länge von ungefähr 2mm bis 8mm, insbesondere von ungefähr 4mm, und/oder eine Höhe von ungefähr 0,1 mm bis 2mm, insbesondere 1 mm, aufweisen.

Femer kann der Steg zumindest an einem Ende eine Rundung aufweisen. Anders ausgedrückt, innerhalb eines Strömungswegs der Luft befindlichen Kanten des Stegs können abgerundet sein.

In einer weiter bevorzugten Ausführungsform wird eine Formgestaltung der Aussparung und/oder eine Anzahl der Aussparungen in Abhängigkeit einer Temperatur der Luft gewählt.

Gerade dort, wo die anströmende Luft besonders hohe Temperaturen aufweist, ist es vorteilhaft größere Aussparungen und/oder mehr Aussparungen vorzusehen.

Eine Aussparung kann eine Länge von ungefähr 5mm bis 15mm, insbesondere von ungefähr 9mm, und/oder eine Höhe von ungefähr 0,1 mm bis 2mm, insbesondere 1 mm, aufweisen.

In einer weiteren bevorzugten Ausführungsform werden eine Vielzahl von den lamellenartigen Formteilen verwendet, welche derart zu einem Kühlelement miteinanderverbunden sind, dass in einem Querschnitt des Kühlelements ein Wellenprofil ausgebildet wird.

Das wenigstens eine lamellenartige Formteil kann eine erfindungsgemäß modifizierte Kühlrippe bzw. Wellrippe, insbesondere eine Kühlrippe mit einer Kühlrippendicke von ungefähr 0,05mm bis 1 mm, bevorzugt ungefähr 0,5mm, und/oder einer Kühlrippenhöhe von ungefähr 4mm bis 12mm, bevorzugt ungefähr 8,5mm, sein.

Auch kann das wenigstens eine lamellenartige Formteil und/oder die wenigstens eine Durchflusseinrichtung aus einem Material hergestellt sein, welches aus einer Gruppe von Materialien ausgewählt ist, welche Aluminium, Aluminiumlegierungen, Eisen, Eisenlegierungen, Bronze, Kupfer, Kupferlegierungen und dergleichen aufweist.

In einer weiteren bevorzugten Ausführungsform weist die Durchflusseinrichtung mindestens einen inneren Strömungskanal im wesentlichen parallel zu der Längsachse der Durchflusseinrichtung, bevorzugt mehrere innere Strömungskanäle im wesentlichen parallel zu der Längsachse, auf.

Im Querschnitt kann der mindestens eine Strömungskanal eine Form aufweisen, welche im wesentlichen kreis- oder ellipsenförmig, polygonartig oder rechteckig ist, oder Mischformen hieraus aufweist, beispielsweise rechteckig mit mehr oder wenig stark abgerundeten Ecken.

Der mindestens eine Strömungskanal wird von dem Fluid bzw. strömungsfähigen Medium, wie beispielweise einem Kühlmittel bzw. Kältemittel, wenigstens abschnittsweise durchströmt. Das Fluid kann dabei unter einem Betriebsdruck stehen.

Auch kann vorgesehen werden, die Formgestaltung der Aussparung und/oder die Anzahl der Aussparungen in Abhängigkeit einer Lage eines Strömungskanals in Bezug auf die umströmende Luft zu wählen. Diesem Prinzip liegen oben beschriebenen Temperaturüberlegungen zugrunde.

In einer bevorzugten Ausgestaltung umströmt die Luft das wenigstens eine lamellenartige Formteil in der Längsrichtung des wenigstens einen lamellenartigen Formteils.

Es kann auch vorgesehen werden, das wenigstens eine lamellenartige Formteil mit zwei parallelzueinender angeordneten Durchflusseinrichtungen zu verbinden, wobei das wenigstens eine lamellenartige Formteil zwischen den zwei Durchflusseinrichtungen angeordnet ist derart, dass die Längsrichtung des wenigstens einen lamellenartigen Formteils in Bezug auf eine Hauptausdehnungsrichtung der parallel zueinander angeordneten Durchflusseinrichtungen einen Winkel von ungefähr 90° aufweist.

Zu einer Ab-/Durchleitung des Fluids aus der wenigstens einen Durchflusseinrichtung kann diese mit einer Sammel- und/oder Verteilungseinrichtung, insbesondere gas- und/oder flüssigkeitsdicht, verbunden sein.

In einer weiteren bevorzugten Ausführungsform weist die Sammel- und/oder Verteilungseinrichtung einen rohrförmigen Querschnitt auf.

Eine weitere bevorzugte Ausführungsform stellt einen Kühlerblock dar, bei dem eine Vielzahl von den erfindungsgemäßen lamellenartigen Formteilen und eine Vielzahl von den erfindungsgemäßen Durchflusseinrichtungen verwendet werden, wobei die Vielzahl von den Durchflusseinrichtungen in mehreren parallelen Ebenen, insbesondere zwei Ebenen, angeordnet sind. Die lamellenartigen Formteile können dabei zwischen jeweils zwei benachbarten Durchflusseinrichtungen, insbesondere in Reihe oder parallel angeordnet sein.

Auch kann ein über mehrere Ebenen durchgehendes Formteil vorgesehen werden.

Auch können in einem solchen Kühlerblock mehrere Sammel- und/oder Verteilungseinrichtungen mit jeweils mehreren von den Durchflusseinrichtungen verbunden sein.

Bevorzugt lässt sich die Erfindung im Rahmen eines Kühlers, insbesondere eines Ladeluftkühlers realisieren, bei dem die Luft eine Ladeluft, insbesondere eine Ladeluft eines Kraftfahrzeugs ist, welche in dem Kühler, insbesondere in dem Ladeluftkühler, heruntergekühlt wird.

Weitere Vorteile und Ausführungsformen der vorliegenden Erfindung ergeben sich aus den beigefügten Zeichnungen. Darin zeigen:
- Fig. 1: eine Teildarstellung einer erfindungsgemäßen Vorrichtung zum Austausch von Wärme;
- Fig. 2a und Fig. 2b: Darstellungen einer Well- bzw. Kühlrippe gemäß einer findungsgemäßen Vorrichtung zum Austausch von Wärme;
- Fig. 3: Darstellungen eines Kühlerblocks, in welchem eine Vielzahl von erfinderischen Vorrichtungen zum Austausch von Wärme angeordnet sind;
- Fig. 4: eine Darstellung eines Kühlerblock eines Ladeluftkühlers gemäß einem Stand der Technik;
- Fig. 5: eine Darstellung einer Kühlrippe gemäß einem Stand der Technik.

### Ausführungsbeispiel: Ladeluftkühler mit einer erfindungsgemäßen Flachrohr-Kühlrippen-Verbindung bzw. einer abgesetzten Ladeluftlamelle bzw. Well-/Kühlrippe für eine indirekte Ladeluftkühlung

Im folgenden wird ein erfindungsgemäßer Ladeluftkühler mit abgesetzten Luftlamellen bzw. Well-/Kühlrippen, kurz Rippen, beschrieben.

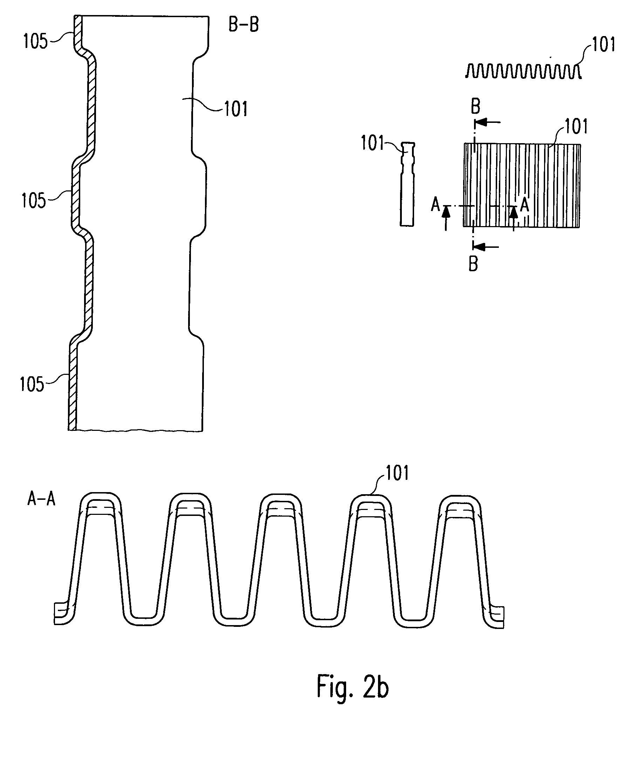

Fig.1 sowie Fig.2a und Fig.2b zeigen insbesondere die abgesetzten Luftlamellen 101 und deren Geometrie sowie deren Verbindung zu einem erfindungsgemäßen von einem Kühlmittel durchströmten Flachrohr 102. Die Darstellungen in Fig.2a, welche mit denen in Fig.2b übereinstimmen, sind dabei in nicht einschränkender Weise bemaßt.

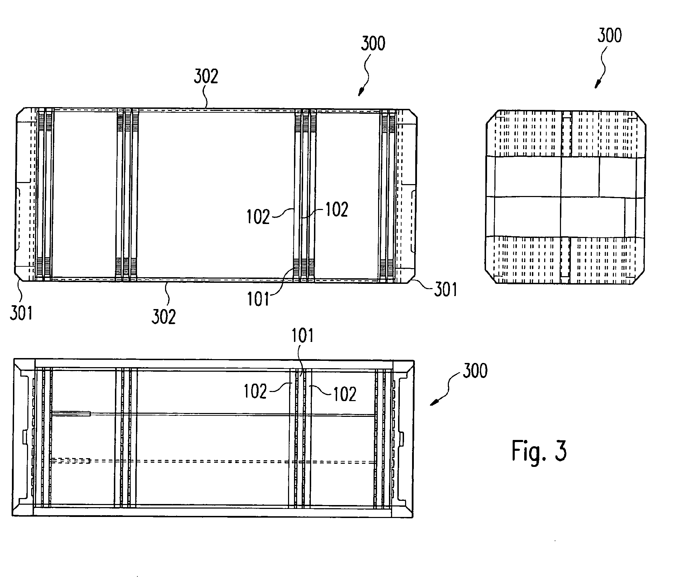

Fig.3 zeigt einen Kühlerblock mit einer Kühlermatrix 300 des ausführungsgemäßen Ladeluftkühlers, in diesem Fall eines zweireihigen Ladeluftkühlers, mit einer Vielzahl von den erfindungsgemäßen abgesetzten Luftlamellen 101 und Flachrohren.

Darstellungen in Fig.3 sind ebenfalls beispielhaft in nicht einschränkender Weise bemaßt.

So weist der ausführungsgemäße Kühlerblock in Fig.3 Abmessungen von ungefähr 630mm x 222mm x 270mm auf.

Wie Fig.3 zeigt, umfasst die Kühlermatrix des Kühlerblocks des zweireihigen Ladeluftkühlers 300 mehrere von den Flachrohren 102, die unter Verwendung einer Aluminiumlegierung durch Strangpressen gebildet werden.

Die Flachrohre 102 sind bei der ausführungsgemäßen Kühlermatrix in zwei parallelen Ebenen angeordnet, wobei die jeweils in einer Ebene angeordneten Flachrohre 102 ihrerseits ebenfalls parallel zueinander ausgerichtet sind.

Jedes Flachrohr 102 umfasst mehrere im wesentlichen parallel zu einer Längsrichtung des Rohrs 102 verlaufende Kältemitteldurchlässe (Kältemittelkanäle), welche einen rechteckigen Querschnitt 103 besitzen und durch welche ein Kältemittel strömt.

Wie weiter in Fig.3 gezeigt, sind mehrere gewellte aus Aluminium bestehende erfindungsgemäße abgesetzte Rippen (Kühlrippen) 101 durch eine Walze gebildet zwischen benachbarten Flachrohren 102 angeordnet.

Fig. 1 sowie die Figuren 2a (beispielhaft bemaßt) und b zeigen eine solche erfindungsgemäße abgesetzte Kühlrippe 101 bzw. die erfindungsgemäße Kühlrippen- Flachrohr Verbindung 100 im Detail.

Die dargestellte erfindungsgemäße Kühlrippe 101 weist eine Höhe von ungefähr 8,6mm, eine Dicke von ungefähr 1 mm und eine Länge von ungefähr 222mm auf.

Gegebenenfalls können auch unterbrochene abgesetzte Rippen 101 jeweils der erfindungsgemäßen Ausgestaltung mit geringerer Länge vorgesehen werden.

In einem Querschnitt 104 weist die erfindungsgemäße abgesetzte Rippe 101 eine wellen- bzw. U-/W-förmige Form auf.

Entlag einer Rippenlängsachse 120 der abgesetzten Rippe 101 an geometrischen Wendepunkten 130, 131 und 132 des Querschnitts 104 weist die abgesetzte Rippe 101 einen stegartigen Verlauf auf.

Bei dem stegartigen Verlauf der abgesetzten Rippe 101 sind Stege 105 und Aussparungen 140 wechseln angeordnet.

Der Steg 105 weist eine Länge von ungefähr 4mm und eine Höhe von ungefähr 1 mm auf. Ferner sind die innerhalb eines Strömungswegs der Luft befindlichen Kanten des Stegs 105 abgerundet.

Die Aussparung 140 weist eine Länge von ungefähr 9mm und eine Höhe von ungefähr 1 mm auf.

Die Stege 105 sind herstellbar durch Material hinzu- oder auch durch Material abnehmende Verfahren.

Oberflächen der Stege 105 bilden reduzierte Kontakt- bzw. Anlageflächen, über welche die abgesetzte Rippe 101 durch eine Lötverbindung mit dem Flachrohr 102 verbunden.

In den Aussparungen 140 ergibt sich in diesem Fall kein Oberflächenkontakt zwischen der abgesetzten Rippe 1010 und dem Flachrohr 102.

Die Flachrohre 101 und die abgesetzten Kühlrippen 102 bilden einen Kernabschnitt bzw. zumindest teilweise die Kühlermatrix 300 des Ladeluftkühlers.

Eine Seitenplatte 301 zum Verstärken des Kernabschnitts ist sowohl am oberen wie am unteren Ende des Kernabschnitts gemäß Fig.3 angeordnet und an die Rohre 102 und an die Rippen 101 durch Lötmaterial gelötet, welches auf beide Seitenflächen der Rippen 101 plattiert bzw. aufgetragen ist.

Ein Paar von Sammeltanks 302 ist mit jedem Strömungskanalende der Flachrohre 102 strömungsdicht verbunden, um sich in eine Richtung senkrecht zur Längsachse jedes Flachrohrs 102 zu erstrecken.

Unter einem strömungsdicht miteinander Verbinden wird ein Verbinden in der Weise verstanden, dass durch diese Verbindung ein flüssiges und/oder gasförmiges Fluid, wie beispielsweise das Kühlmittel, flüssigkeits- und/oder gasdicht strömen kann.

Der Kernabschnitt des Ladeluftkühlers bzw. die Kühlermatrix 300 wird von der Ladeluft mit hoher Temperatur von ungefähr 270 °C ange- bzw. umströmt 106, wobei zwischen der Ladeluft und dem Kältemittel ein Wärmetausch durchgeführt wird, bei welchem die Ladeluft gekühlt wird.

Bei dem Wärmetausch wird Wärme von der heißen Ladeluft in diesem erfindungsgemäßen Fall vermindert über die abgesetzten Rippen 101 und über die mit den abgesetzten Rippen 101 über die auf die Stege 105 reduzierten Kontaktflächen 110 bis 115 verbundenen Flachrohre 102 in das Kühlmittel, welches dabei in reduzierterem Maße erhitzt wird, abgeführt.

Dies gilt insbesondere für sogenannte kritische Blockbereiche und/oder kritische bzw. erste Profile. Darunter sind die Bereiche des Kühlerblocks bzw. die Bereiche von Flachrohren 102 zu verstehen, die in Strömungsrichtung als erste mit der heißen, noch ungekühlten bzw. kaum gekühlten Ladeluft angeströmt werden.

Das Kühlmittel ist gerade in diesen kritischen Profilen der Gefahr des Siedens und damit der Dampfblasenbildung ausgesetzt. Die vorteilhafte Wirkung der Erfindung, nämlich die reduzierte und/oder langsame Wärmeleitung kommt somit gerade in diesen Bereichen zum tragen.

Das Kühlmittel nimmt durch die erfindungsgemäße Ausgestaltung der Kühlrippen-Flachrohr-Verbindung bzw. abgesetzten Rippen 101 weniger Wärme bzw. Wärmeenergie auf und wird dadurch in geringerem Maße erhitzt. Eine Dampfblasenbildung mit den daraus resultierenden, oben beschriebenen Problemen wird vermindert.

Mit dem ausführungsgemäßen Ladeluftkühler für eine Brennkraftmaschine eines KFZ wird eine Temperatur einer der Brennkraftmaschine des KFZ von einem Turbolader bzw. Kompressor zugeführten Ladeluft heruntergekühlt, wodurch eine Leistung der Brennkraftmaschine gesteigert werden kann.

Die vorliegende Erfindung kann insbesondere auf Kühler oder Zuheizer im Allgemeinen in einem Kühlkreislauf angewendet werden. Eine Ausgestaltung der jeweiligen Wärmetauschermatrix ist nicht auf im obigen beschriebene Geometrien beschränkt. Sie kann im Rahmen der erfinderischen Flachrohr-Kühlrippen-Verbindung bzw. der abgesetzten Kühlrippe beliebig gewählt werden.

Obwohl die vorliegende Erfindung in Verbindung mit bevorzugten Ausführungsformen unter Bezug auf die anliegenden Zeichnungen vollständig erläutert wurde, erschließen sich dem Fachmann zahlreiche Abwandlungen und Modifikationen, die sämtlich im Umfang der vorliegenden Erfindung liegen, die in den anliegenden Ansprüchen festgelegt ist.

## Patentansprüche

1. Vorrichtung zum Austausch von Wärme,
mit wenigstens einer Durchflusseinrichtung, welche von einem Fluid durchströmbar ist, und mit wenigstens einem mit der wenigstens einen Durchflusseinrichtung verbundenen lamellenartigen Formteil, welches von Luft umströmbar ist, wobei über die Verbindung ein Wärmeaustausch zwischen der Luft und dem Fluid bewirkbar ist,
**dadurch gekennzeichnet, dass**
die Verbindung mehrere entlang einer Längsrichtung des wenigstens einen lamellenartigen Formteils angeordnete Aussparungen aufweist.

2. Vorrichtung gemäß Anspruch 1,
**dadurch gekennzeichnet, dass**
das wenigstens eine lamellenartige Formteil entlag der Verbindung mehrere Stege aufweist, unter Verwendung derer die Verbindung zu der wenigstens einen Durchflusseinrichtung hergestellt wird, wobei zwischen den Stegen die Aussparungen ausgebildet werden.

3. Vorrichtung gemäß Anspruch 1,
**dadurch gekennzeichnet, dass**
die wenigstens eine Durchflusseinrichtung entlang der Verbindung mehrere Stege aufweist unter Verwendung derer die Verbindung zu dem wenigstens einen lamellenartigen Formteil hergestellt wird, wobei zwischen den Stegen die Aussparungen ausgebildet werden.

4. Vorrichtung gemäß Anspruch 2 oder 3,
**dadurch gekennzeichnet, dass**
ein Steg eine Länge von ungefähr 2mm bis 8mm, insbesondere von ungefähr 4mm, und/oder eine Höhe von ungefähr 0,1 mm bis 2mm, insbesondere 1 mm, aufweisen/aufweist.

5. Vorrichtung gemäß einem de Ansprüche 2 bis 4,
**dadurch gekennzeichnet, dass**
der Steg zumindest an einem Ende eine Rundung aufweist und/oder dass innerhalb eines Strömungswegs der Luft befindlichen Kanten des Stegs abgerundet sind.

6. Vorrichtung gemäß Anspruch einem der voranstehenden Ansprüche,
**dadurch gekennzeichnet, dass**
eine Formgestaltung der Aussparung und/oder eine Anzahl der Aussparungen in Abhängigkeit einer Temperatur der Luft gewählt wird.

7. Vorrichtung gemäß einem der vorstehenden Ansprüche,
**dadurch gekennzeichnet, dass**
die Aussparung eine Länge von ungefähr 5mm bis 12mm, insbesondere von ungefähr 9mm, und/oder eine Höhe von ungefähr 0,1 mm bis 2mm, insbesondere 1 mm, aufweisen/aufweist.

8. Vorrichtung gemäß einem der voranstehenden Ansprüche,
**dadurch gekennzeichnet, dass**
die Vorrichtung eine Vielzahl von den lamellenartigen Formteilen aufweist, welche derart zu einem Kühlelement miteinanderverbunden sind, dass in einem Querschnitt des Kühlelements ein Wellenprofil ausgebildet wird.

9. Vorrichtung gemäß einem der vorstehenden Ansprüche,
**dadurch gekennzeichnet, dass**
das wenigstens eine lamellenartige Formteil eine Kühlrippe, insbesondere eine Kühlrippe mit einer Kühlrippendicke von ungefähr 0,05mm bis 1 mm, bevorzugt ungefähr 0,5mm, und/oder einer Kühlrippenhöhe von ungefähr 4mm bis 12mm, bevorzugt ungefähr 8,5mm bis 6mm, ist.

10. Vorrichtung gemäß einem der vorstehenden Ansprüche,
**dadurch gekennzeichnet, dass**
das wenigstens eine lamellenartige Formteil und/oder die wenigstens eine Durchflusseinrichtung aus einem Material hergestellt sind/ist, welches aus einer Gruppe von Materialien ausgewählt ist, welche Aluminium, Aluminiumlegierungen, Eisen, Eisenlegierungen, Bronze, Kupfer, Kupferlegierungen und dergleichen aufweist.

11. Vorrichtung gemäß wenigstens einem der vorstehenden Ansprüche,
**dadurch gekennzeichnet, dass**
die wenigstens eine Durchflusseinrichtung mindestens einen inneren Strömungskanal im wesentlichen parallel zu einer Längsachse der wenigstens einen Durchflusseinrichtung, bevorzugt mehrere innere Strömungskanäle im wesentlichen parallel zu der Längsachse, aufweist.

12. Vorrichtung gemäß dem vorstehenden Anspruch,
**dadurch gekennzeichnet, dass**
der mindestens eine Strömungskanal im Querschnitt eine Form aufweist, welche im wesentlichen kreis-, ellipsenförmig, polygonartig oder rechteckig ist, oder Mischformen hieraus aufweist.

13. Vorrichtung gemäß Anspruch 11 oder 12,
**dadurch gekennzeichnet, dass**
eine Formgestaltung der Aussparung und/oder eine Anzahl der Aussparungen in Abhängigkeit einer Lage eines Strömungskanals in Bezug auf die umströmende Luft gewählt wird.

14. Vorrichtung gemäß wenigstens einem der vorstehenden Ansprüche,
**dadurch gekennzeichnet, dass**
die Luft das wenigstens eine lamellenartige Formteil in der Längsrichtung des wenigstens einen lamellenartigen Formteils umströmt.

15. Vorrichtung gemäß einem der vorstehenden Ansprüche,
**dadurch gekennzeichnet, dass**
das Fluid ein flüssiges und/oder gasförmiges Fluid, insbesondere ein Kältemittel.

16. Vorrichtung gemäß einem der vorstehenden Ansprüche,
**dadurch gekennzeichnet, dass**
das wenigstens eine lamellenartige Formteil mit zwei parallelzueinender angeordneten Durchflusseinrichtungen verbunden ist, wobei das wenigstens eine lamellenartige Formteil zwischen den zwei Durchflusseinrichtungen angeordnet ist derart, dass die Längsrichtung des wenigstens einen lamellenartigen Formteils in Bezug auf eine Hauptausdehnungsrichtung der parallel zueinander angeordneten Durchflusseinrichtungen einen Winkel von ungefähr 90° aufweist.

17. Vorrichtung gemäß einem der vorstehenden Ansprüche,
**dadurch gekennzeichnet, dass**
die wenigstens eine Durchflusseinrichtung mit einer Sammelund/oder Verteilungseinrichtung, insbesondere gas- und/oder flüssigkeitsdicht, verbunden ist.

18. Vorrichtung gemäß einem der vorstehenden Ansprüche,
verwendet in einem Kühlerblock mit einer Vielzahl von den lamellenartigen Formteilen und einer Vielzahl von den Durchflusseinrichtungen, wobei die Vielzahl von den Durchflusseinrichtungen in mehreren parallelen Ebenen angeordnet sind und die lamellenartigen Formteile jeweils zwischen den Durchflusseinrichtung jeweils zweier Ebenen angeordnet sind.

19. Vorrichtung gemäß dem vorstehenden Anspruch,
verwendet in dem Kühlerblock mit mehreren Sammel- und/oder Verteilungseinrichtungen, die jeweils mit mehreren von den Durchflusseinrichtungen verbunden sind.

20. Kühler, insbesondere Ladeluftkühler mit einer Vorrichtung gemäß einem der voranstehenden Ansprüche, bei dem die Luft eine Ladeluft, insbesondere eine Ladeluft eines Kraftfahrzeugs ist, welche in dem Kühler, insbesondere in dem Ladeluftkühler, heruntergekühlt wird.

21. Verfahren zur Herstellung einer Vorrichtung zum Austausch von Wärme,
**dadurch gekennzeichnet, dass**
bei dem Verfahren eine Verbindungsstelle zwischen wenigstens einer Durchflusseinrichtung, welche von einem Fluid durchströmbar ist, und wenigstens einem mit der wenigstens einen Durchflusseinrichtung verbundenen lamellenartigen Formteil, welches von Luft umströmbar ist, wobei über die Verbindung ein Wärmeaustausch zwischen der Luft und dem Fluid bewirkbar ist, hergestellt wird durch Löten, Schweißen oder Kleben,
- wobei die Verbindung mehrere entlang einer Längsrichtung des wenigstens einen lamellenartigen Formteils angeordnete Aussparungen aufweist.
